# EUROPEAN PATENT SPECIFICATION

(11) **EP 3 241 272 B1**
(45) Date of publication and mention of the grant of the patent: **03.05.2023**
(21) Application number: 14909517.6
(22) Date of filing: 31.12.2014
(51) Int. Cl.: H02P 3/06, H02P 3/12, H02P 3/22, H02K 1/00, H02P 25/14, A01D 34/78, H02N 11/00

(54) **METHOD AND SYSTEM FOR BRAKING A MOTOR**
BREMSSYSTEM UND -VERFAHREN FÜR EINEN MOTOR
PROCÉDÉ ET SYSTÈME DE FREINAGE DE MOTEUR

(43) Date of publication of application: 08.11.2017
(73) Proprietor: Techtronic Industries Co., Ltd., Tsuen Wan, N.T. Hong Kong (CN)
(72) Inventor: ZHAO, Mingsheng, Dongguan Guangdong (CN)
(74) Representative: Novagraaf Group
(86) International application number: PCT/CN2014/095964
(87) International publication number: WO 2016/106709

(56) References cited:
- EP-A2- 1 043 829
- CN-A- 1 030 674
- CN-A- 1 353 881
- CN-Y- 2 764 055
- DE-C1- 19 702 195
- DE-U1- 29 601 627
- JP-A- S61 266 064
- Unknown: "Universal motor", , 5 November 2014 (2014-11-05), XP055484558, Retrieved from the Internet: URL:https://en.wikipedia.org/w/index.php?t itle=Universal_motor&oldid=632508826 [retrieved on 2018-06-14]

## Description

### TECHNICAL FIELD

The present invention relates to a method and system for braking a hybrid AC / DC motor and particularly, although not exclusively, to a motor braking mechanism arranged in a hybrid AC / DC power tool (e.g. a walk-behind type lawn mower) with a hybrid AC / DC motor.

### BACKGROUND

A power tool typically operates with a motor or a combustion engine, utilizing electricity or gas/fuel, for driving a tool element so as to perform different kinds of work operation such as cutting, grinding, drilling, sanding, polishing, etc. Of the two types of power tools, electric power tools are more preferable in some applications compared with gaseous / fuel type power tools, as they are relatively easy to handle and operate.

In the past, electrical power tools operate with either AC power or DC power but not both Specifically, DC power tools generally utilize a battery pack operably connected with the power tool for powering the motor;. Whereas AC power tools generally utilize AC mains power from the mains socket for powering the motor, to operate an AC or DC electric power tool, an operator will generally have to switch on a power switch arranged on the power tool by pressing the power switch once so as to connect the electric power source with the motor to power the motor. In some alternative designs, the power tool includes a trigger-type power switch that needs to be continuously actuated by the operator for operating the tool. Hybrid type power tools have recently been developed. Unlike the conventional power tools that operate with only DC power or only AC power, hybrid type power tools include a circuit and motor arrangement that is operable with either AC power or DC power. Thus, compared with traditional DC-only or AC-only power tools, hybrid type power tools are more versatile as they are adapted for both corded operation using AC power (particularly desirable for high load / power operations), and cordless operation using DC battery pack (when portability of the tool is desired). On the other hand, however, existing hybrid type power tools require more complex operation and control circuitries and are often more difficult to operate compared with traditional DC-only or AC-only power tools.

A system for braking a motor, wherein the motor is a universal motor operable in both AC mode and DC mode using AC power and DC power respectively, is known from DE 197 02 195 C1.

A system according to the preamble of claim 1 is known from EP 1 043 829 A2.

### SUMMARY OF THE INVENTION

A system for braking a motor according to the present invention is defined in independent claim 1.

A method for braking a motor according to the invention is defined in independent claim 4.

In accordance with the first aspect of the present invention, there is provided system for braking a motor, comprising: a motor coupled with a power source through a control circuit; wherein the motor is a hybrid AC / DC motor operable in both AC mode and DC mode using AC power and DC power respectively, wherein coils in the motor are energized when the motor operates, wherein the coils comprise AC coils and DC coils that are both energized irrespective of whether motor operates in AC mode or DC mode, characterized in that the energy accumulated in the coils during operation of the motor is used to brake the motor as the operation of the motor terminates in that the energy accumulated in the DC coils is continuously dissipated through a resistive means in the control circuit while the DC coils are continuously counteracting a residue electromagnetic energy in the AC coils to brake the motor as the operation of the motor terminates.

In one embodiment of the first aspect, the AC coils and DC coils are both arranged on a rotor of the motor; or the AC coils and DC coils are both arranged on a stator of the motor.

In one embodiment of the first aspect, the DC coils are wound directly onto a mounting member, and the AC coils are wound on an outer side of the DC coils.

In accordance with the second aspect of the present invention, there is provided a method for braking a motor, wherein the motor is coupled with a power source through a control circuit and wherein the motor is a hybrid AC / DC motor operable in both AC mode and DC mode using AC power and DC power respectively comprising the steps of: operating the motor such that coils in the motor are energized when the motor operates; terminating operation of the motor so as to allow the motor to return to rest; wherein the coils comprise AC coils and DC coils that are both energized irrespective of whether motor operates in AC mode or DC mode, characterized in that the energy stored in the coils during operation of the motor is used to brake the motor as the operation of the motor terminates in that the energy accumulated in the DC coils is continuously dissipated through a resistive means in the control circuit while the DC coils are continuously counteracting a residue electromagnetic energy in the AC coils to brake the motor as the operation of the motor terminates.

### BRIEF DESCRIPTION OF THE DRAWINGS

Embodiments of the present invention will now be described, by way of example, with reference to the accompanying drawings in which:
Figure 1 is a perspective view of a lawn mower in accordance with one embodiment of the present invention;
Figure 2A is a side view of the lawn mower of Figure 1;
Figure 2B is a bottom view of the lawn mower of Figure 1;
Figure 2C is a top view of the lawn mower of Figure 1; and
Figure 3 shows a control circuit with braking arrangement for the lawn mower of Figure 1 in accordance with one embodiment of the present invention.

### DETAILED DESCRIPTION OF THE PREFERRED EMBODIMENT

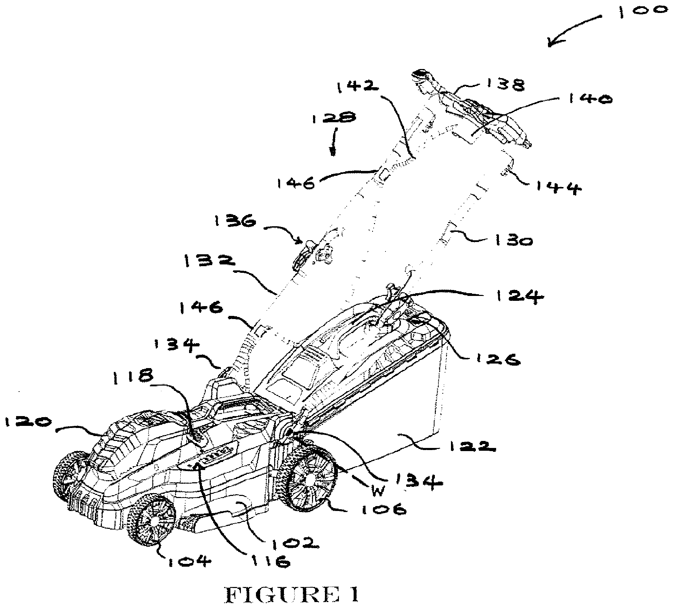

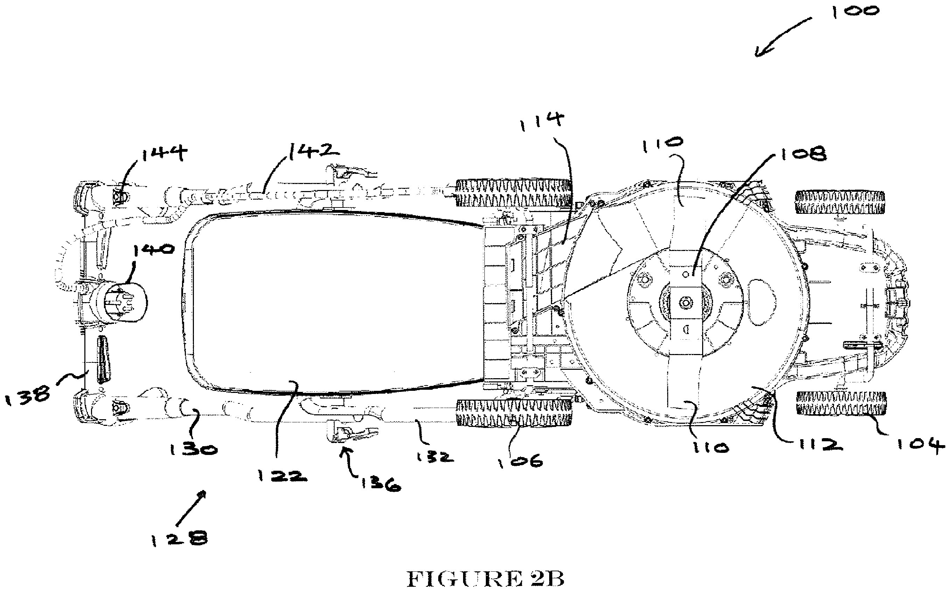

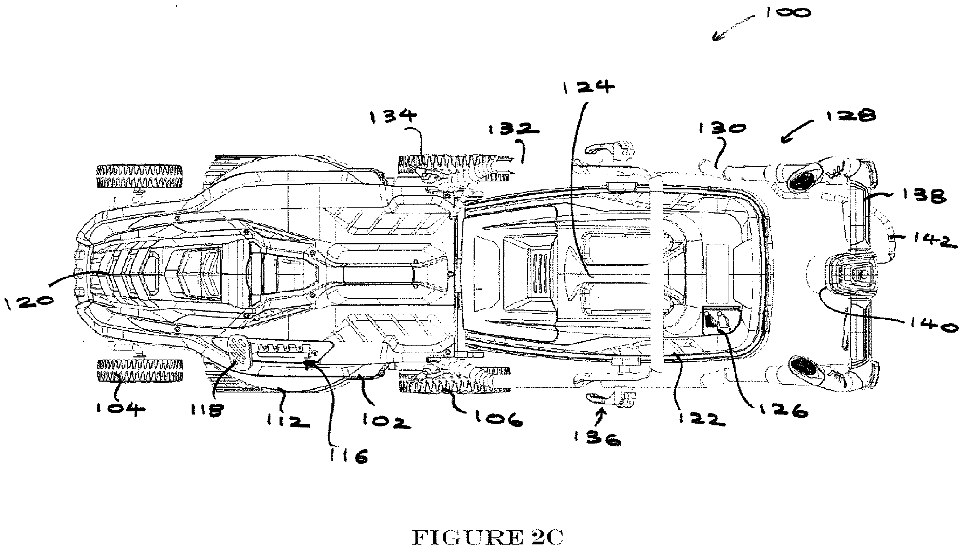

Figures 1-2C show a power tool in the form of a hybrid AC / DC walk-behind type lawn mower 100 in accordance with one embodiment of the present invention. As shown in Figures 1-2C, the mower 100 includes a main body 102 coupled with a pair of front wheels 104 and a pair of rear wheels 106. Preferably, a motor (not shown) is arranged inside the main body 102, and the motor shaft of the motor is operably coupled with a cutting blade 108 for cutting grass . As shown in Figure 2B, the cutting blade 108 in the present embodiment is a substantially elongated blade with two opposite cutting vanes 110 and it is arranged on an underside of the main body 102. When the mower 100 is moving or resting on a floor surface, the cutting blade 108 is arranged in close proximity to and parallel to the floor surface for cutting grass. A blade shroud 112 for the cutting blade 108 is also arranged on the underside of the main body 102. The blade shroud 112 in the present embodiment includes a guiding arrangement 114 for guiding the cut grass into the main body 102.

In one embodiment, the mower 100 includes a height adjustment lever mechanism 116 arranged in the main body 102 for controlling a ride height of the mower 100 and hence the height of the cutting blade 108 with respect to the floor surface. The height adjustment lever mechanism 116 allows the blade height to be adjusted so that different lengths of grass can be efficiently cut by the cutting blade 108. In the present embodiment, the height adjustment lever mechanism 116 includes a pedal or an actuating lever 118 arranged on one side of an upper surface of the main body 102 and it can easily manipulated by the operator for blade height control.

A control circuit (not shown) for controlling the power and operation of the motor of the mower 100 is at least partly arranged inside the main body 102. In one embodiment, the control circuit electrically connects the motor with a power source, and controls the supply of power from the power source to the motor, in the present embodiment, the mower 100 is a hybrid AC / DC type mower which has a hybrid AC / DC motor that can operate with AC power in AC mode and with DC power in DC mode. The power source in the present embodiment may be an AC power source (eg AC mains power) or a DC power source (eg a battery pack). Details of the control circuit will be discussed further below.

In the present embodiment, a pivotable door 120 is arranged on the upper front portion of the main body 102 of the mower 100. The pivotable door 120 preferably encloses the power chamber of the mower 100. In one embodiment, the power chamber includes a number of power connection ports that function as switches operably connected in the control circuit. These power connection ports are operable to control the power supplied from the power source to the motor. Preferably, these power connection ports include ports for connecting one or more DC battery pack , and ports for connecting with one or more electrical coupling key member such as a fuse key.

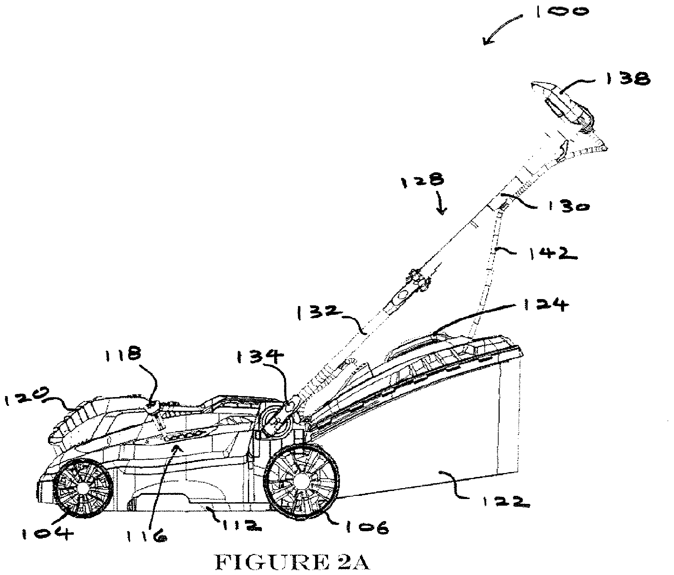

As shown in Figures 1-2C, a grass storage box 122 for storing grass being cut is detachably connected at a rear end of the main body 102. Any types of mechanical or electrical coupling means may be used to detachably mount the grass storage box 122 to the main body 102 of the mower 100. The grass storage box 122 includes a handle portion 124 which allows the box to be easily manipulated by the operator. Figure 2A shows that the bottom surface of the grass storage box 122 is at an angle to the floor surface and is not parallel with a base of the main body 102. Preferably, the grass storage box 122 includes an opening (not shown) arranged on the front surface for communication with a corresponding rear opening of the main body 102. As the grass is being cut by the cutting blade 108, the grass enters the main body 102 under the guidance of the guiding arrangement 114 of the blade shroud 112, and is subsequently stored in the grass storage box 122. in one embodiment, the grass storage box 122 may also include a grass storage box full indicator 126 for indicating whether the box 122 is fully loaded with grass. The grass storage box full indicator 126 may be a mechanical indicator, a visual indicator or any other types of electrical indicators. Whenever the grass storage box full indicator 126 indicates that the grass storage box 122 is full, the operator may detach the grass storage box 122 from the main body 102 to empty the grass stored within the grass storage box 122. In some alternative embodiments, the mower 100 may not include any grass storage box 122 and the rear end opening of the main body 102 is enclosed using a mulching plug (not shown) so that the cut grass will not enter the main body.

With continuous reference to Figures 1-2C, the mower 100 in the present embodiment further includes a handle assembly 128 that is pivotably connected to the main body 102 about a pivot axis W arranged on the main body 102. The handle assembly 128, in one embodiment, is pivotable between an operation position and a storage position, in the operation position, the handle assembly 128 is arranged as shown in Figures 1-2C to be operated by an operator to maneuver the lawn mower 100 along a floor surface for grass cutting operations. In the storage position, the handle assembly 128 is folded against the main body 102 to provide compact storage of the lawn mower 100.

The handle assembly 128 preferably includes an upper handle frame 130 operably coupled with a lower handle frame 132 that is in turn coupled to the main body 102. Both the upper and lower handle frames 130, 132 resume a substantially U-shaped structure in the present invention. A pivot lock mechanism 134 is preferably arranged at (each of) the low ends of the lower handle frame 132 so as to securely couple the lower handle frame 132 to the main body 102 and to restrain the pivoting motion of the handle assembly 128 so as prevent unwanted pivoting of the handle assembly 128 during operation or storage.

Preferably, the handle assembly 128 is telescopic or adjustable so as to allow the length of the handle assembly 128 to be suitably adjusted for different operations or operators with different arm lengths and height. Specifically, in this embodiment, the upper handle frame 130 is coupled to the lower handle frame 132 through an adjustment means 136 arranged at both sides of the frames 130, 132. In the present embodiment, the adjustment means 136 comprises holes formed on the upper ends of the lower handle frame, holes formed on the lower ends of the upper handle frame, and a pair of handles with locking pins that extend through any of the holes in both the upper and lower handle frames. combinations of holes of the upper and lower handle frames 130, 132 provide different extent of extension of the handle assembly 128.

The upper handle frame 130 is adjustably mounted to the lower handle frame 132 through the locking pins and holes arrangement 136 as described above. In the present embodiment, the upper handle frame 130 includes a handle part 138 at its uppermost end. The handle part 138 is also substantially U shaped, but is formed on a plane that is substantially perpendicular to the U-shaped plane of the upper handle frame 130. A plurality of buttons and triggers are arranged on the handle part 138 for operating the mower. An AC power port 140 with a circular shroud is arranged in the middle of the handle part 138. The AC power port 140 is operable to receive a power plug of an extension cord, with the other end of the extension cord having another plug coupled directly with an AC mains power source, in one embodiment, part of the control circuit is arranged in the handle part 138, and that part of the control circuit is operably connected with the other parts of the control circuit in the main body 102 through an exposed motor control cable 142. In the present embodiment, a pair of cord hooks 144 is arranged on an underside of the upper handle frame 130 for mounting or winding the extension cord of the AC power connection line.

The motor control cable 142 extends from the handle part 138 to the main body 102 to electrically couple the AC power port 140 in the handle part 138 with the control circuit in the main body. A pair of cord retainers 146, one arranged on one side of the upper handle frame 130 and the other arranged on the same side of the lower handle frame 132, is provided for retaining the motor control cable 142 and to prevent dangling of the cable.

Whilst the basic construction of the lawn mower 100 in one embodiment is described in detail with reference to the figures, it should be appreciated that variations and modifications of the features described are possible. In some embodiments, not all of the above described features may be present in the mower 100. Alternatively, the mower 100 is capable of having other additional features which facilitates its operation and aids control by the operator.

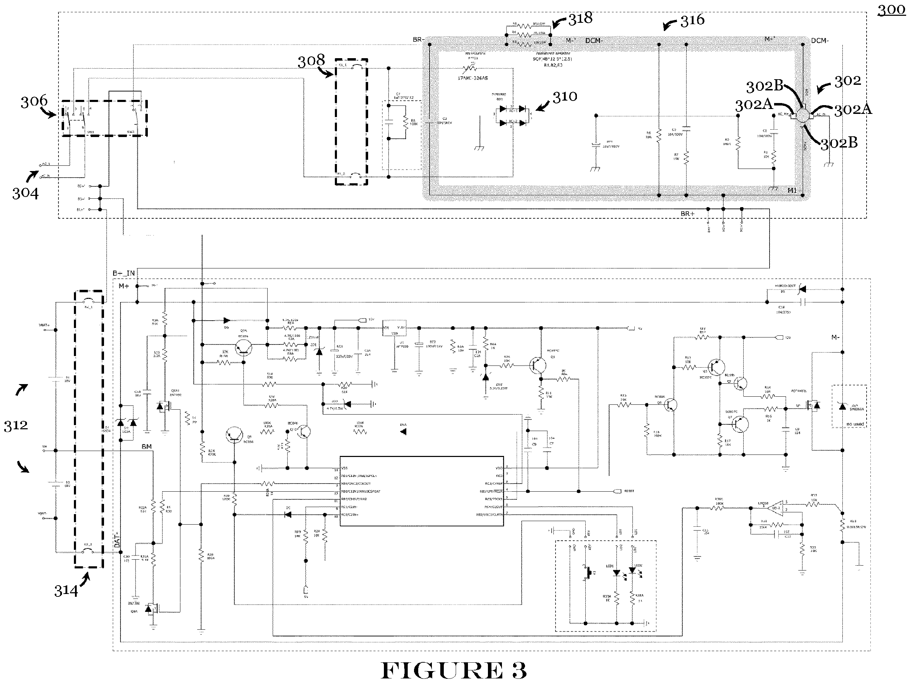

Referring to Figure 3, there is provided a system for braking a motor, comprising: a motor coupled with a power source through a control circuit; wherein coils in the motor are energized when the motor operates, and the energy accumulated in the coils during operation of the motor is used to brake the motor as the operation of the motor terminates.

Figure 3 shows an embodiment of a control circuit 300 with a braking arrangement adapted to be arranged in the mower 100 of Figure 1. In one embodiment, the control circuit 300 is arranged partly inside the main body 102 and partly in the handle part 138 of the mower 100. The control circuit 300 in the embodiment of Figure 3 includes two portions, a DC operation portion and an AC operation portion, both of which are coupled with the hybrid AC / DC motor 302 arranged in the main body 102 of the mower 100. It should be noted that the differentiation of AC and DC operation portions is simplified representation presented here merely for the sake to facilitate understanding the invention. In operation, the control circuit 300 includes elements or members that are operating irrespective of whether the motor 302 is operated in AC mode or in DC mode. The following description of the circuit 300 will focus largely on the key circuit portion that relates to the braking operation of the motor, thus ignoring some parts of the circuit that are not directly related.

In the present embodiment, the AC operation portion of the control circuit 300 includes an AC power supply 304. Preferably, the AC power supply 304 is connected with the control circuit 300 through an extension cable connecting between the AC mains socket and the AC power port 140 in the handle part 138 of the mower 100. The AC operation portion of the circuit 300 is connected with the motor 302 through a number of switches. More particularly, the AC operation portion of the circuit 300 is connected first to a first switch arrangement 306 (non-actuated in the configuration as shown). This switch arrangement 306 may be, for example, operable by the actuators and triggers arranged in the handle part 138 of the mower 100. for example, when the operator actuates the actuators and / or the triggers in the handle part 138 while maneuvering the mower 100 over a floor surface in a mowing operation, the first switch arrangement 306 may be actuated such that the switches therein are all closed. in the present embodiment, all switches in the first switch arrangement 306 are closed at the same time, however, in other embodiments this needs not be the case and the switches can be closed and opened independently. A second switch arrangement 308 is arranged in the AC operation portion of the control circuit 300, and the second switch arrangement 308 includes switches that are actuated or closed by an electrical conductive key member (not shown). in one example, the second switch arrangement 308 includes switches arranged in the ports that are arranged in the power chamber in the main body 102 for connecting with one or more electrical coupling key members (such as a fuse key). More particularly, when a fuse key is connected to a corresponding port in the power chamber, the switches in the second switch arrangement 308 in the AC operation portion will be closed or actuated so that the AC circuit is partially completed (fully completed if the first switch arrangement 306 is actuated also). In one embodiment, a rectifier diode bridge 310 and a number of capacitive and resistive components are arranged between the second switch arrangement 308 and the AC coils 302A in the hybrid motor 302.

The DC operation portion of the control circuit 300 in the present embodiment includes a DC power supply 312, in the form of two battery packs as shown in the circuit diagram in Figure 3. Preferably, the battery packs 312 are detachably connected to the power connection ports arranged in the power chamber of the main body 102 of the mower 100. The DC operation portion of the control circuit 300 is connected to the motor 302 through a number of switches. More particularly, the DC operation portion of the circuit 300 is connected with to a third switch arrangement 314 that includes switches that are actuated by an electrical conductive key member. in one example, this third switch arrangement 314 includes switches arranged in the ports that are arranged in the power chamber in the main body 102 for connecting with one or more electrical coupling key members (such as a fuse key). When a fuse key is connected to a corresponding port or ports in the power chamber, the switches in this third switch arrangement 314 in the DC operation portion are closed or actuated so that the DC circuit is partially completed (fully completed if the first switch arrangement 306 is actuated also). The DC operation portion also includes the first switch arrangement 306 in the AC operation portion. As described, this first switch arrangement 306 may be, for example, operable by the actuators and triggers arranged in the handle part 138 of the mower 100. For example, when the operator actuates the actuators and / or the triggers arranged in the handle part 138 while maneuvering the mower 100 over a floor surface in a mowing operation, the switch arrangement 306 may be actuated such that the switches are closed. in the present embodiment, the switches of the switch arrangement 306 are closed at the same time, however, in other embodiments this needs not be the case and the switches may be closed and opened independently. The DC operation portion also includes the DC coils 302B arranged in the hybrid motor 302.

The control circuit 300 in the present embodiment includes a braking arrangement for facilitating braking of the motor when the motor operation terminates. The braking arrangement preferably includes a circuit loop 316 (shaded) connected to the coils 302B of the motor. In the present embodiment, the braking circuit loop 316 is only connected across the DC coils 302B. in the present embodiment, the circuit loop 316 includes a resistive arrangement 318 comprises three parallel resistors for dissipating energy in the coils for braking. Other resistive means or different numbers of resistors may be used in other embodiments.

The motor in one embodiment of the present invention comprises a stator and a rotor arrangement, and the AC coils 302A and the DC coils 302B may both be arranged on the stator or on the rotorofthe motor. Preferably, the DC coils 302B are mounted and wound onto to a mounting frame of the rotor or stator, and the AC coils 302A are mounted and wound on the outer side of the DC coils 302B. The number of turns, and the way of which the AC and DC coils are wound may be different in different embodiments.

During operation in the AC mode, the mower 100 is connected to the AC mains power source and a fuse key is arranged in the port in the power chamber of the main body 102 for closing the second switch arrangement 308. As the operator actuates the trigger and actuators in the handle part 138 of the mower 100, the AC circuit is completed and hence AC mains power is provided to the AC coils 302A of the motor 302. As the AC energy is provided to the motor 302, the rotor of the motor rotates about the stator, and motor shaft is rotated to operate the cutting blade 108 for mowing. in this process, both the AC and DC coils 302A, 302B in the motor 302 are energized with electromagnetic energy. When the mowing operation is completed, the operator releases the trigger and / or the actuator on the handle part 138 and hence deactivates the first switch arrangement 306. This deactivation action breaks open the AC circuit and prevents power from the AC power source to be supplied to the motor 302. At the same time, the switches in the first switching element 306 return to the original position, and this completes the braking circuit loop 316 operatively associated with the DC coils 302B. in other words, the switches in the first switching element 306 indirectly couple the DC coils 302B with the resistive elements 318 in the braking circuit loop 316. Accordingly, the residue energy stored in the DC coils 302B is dissipated through the resistors 318 in the braking circuit loop 316. in the meantime, the DC coils 302B are operable to exchange electromagnetic energy with the AC coils 302A by extracting the residue energy in the AC coils 302A using electromagnetic induction. The end result is that as the DC coils 302B takes energy away from the AC coils 302A, and dissipates the energy through the resistive arrangement 318 in the braking circuit loop 316. This quickly dampens the rotation of the motor 302 and ensures that the motor 302 comes to rest shortly after the operator releases the trigger and actuator control, such as those arranged in the handle part 138 of the mower 100.

On the other hand, during operation in the DC mode, the mower 100 is connected with two detachable battery packs 312. A fuse key is arranged in the port in the power chamber of the main body 102 for closing the third switch arrangement 314. As the operator then actuates the trigger and / or the actuator in the handle part 138 of the mower 100, the DC circuit is completed and hence DC battery power is provided to the DC coils 302A of the motor 302. As DC energy is provided to the motor 302, the rotor of the motor rotates about the stator, and motor shaft is rotated to operate the cutting blade 108 for mowing. in this process, both the AC and DC coils 302A, 302B in the motor 302 are energized with electromagnetic energy. When the mowing operation is completed, the operator releases the triggers and actuator and hence deactivates the first switch arrangement 306. This deactivation action breaks open the DC circuit and prevents power from the DC battery packs 312 to be supplied to the motor 302. At the same time, the switches in the first switching arrangement 306 return to the original position, and this completes the braking circuit loop 316 that is operatively associated with the DC coils 302B. in other words, the switches in the first switching arrangement 306 indirectly couple the DC coils 302B with the resistive elements 318 in the braking circuit loop 316. Accordingly, the residue energy stored in the DC coils 302B is dissipated through the resistors 318 in the braking circuit loop 316. in one embodiment, the DC coils 302B are operable to exchange electromagnetic energy with the AC coils 302A by extracting the residue energy in the AC coils 302A using electromagnetic induction. The end result is that as the DC coils 302B takes energy away from the AC coils 302A, and dissipates the energy extracted through the resistive arrangement 318 in the braking circuit loop 316. This again dampens the rotation of the motor 302 in a short period of time and ensures that the motor 302 comes to rest quickly after the operator releases the trigger and actuator control, such as those arranged in the handle part 138 of the mower 100.

In the above description only the essential parts of the control circuits are described in detail. On the other hand, although the braking circuit portion 316 is shown in Figure 3 to be connected across the DC coils 302B only, in other embodiments, the braking circuit loop 316 may be connected across the AC coils 302A or both the AC and DC coils 302A, 302B for rapid braking of the motor 302.

A person skilled in the art would appreciate that the control circuit 300 in the present invention can have other functions (LED control, power regulation, etc.) that may or may not be shown in the embodiment of Figure 3. The control circuit shown in Figure 3 is merely illustrative, and in practice the circuit 300 can be arranged in a different layout compared to that as shown in Figure 3, as long as it provides the essential braking function. A person skilled in the art would again appreciate that the construction of the motor 302 can be of various forms as long as it caters for and is compatible with the braking arrangement in the control circuit.

The embodiments of the control circuit in the present invention are particularly advantageous in that the control circuit is able to provide a rapid braking to the motor irrespective of whetherthe motor is operating with AC power in AC mode or with DC power in DC mode. The control circuit in the embodiments of the present invention is simple yet robust, as the release of the trigger and actuators for controlling the mower automatically activates the braking circuit. in other words, the user does not have to perform any other action to activate the braking circuit. Other advantages of the present invention in terms of cost, construction, function, safety, efficiency, etc. will become apparent to those skilled in the art by referring to the detailed description above.

Although a lawn mower is specifically described in the above embodiments of the present invention, a person skilled in the art would readily appreciate that the braking control mechanism of the present invention as substantially illustrated and described above may be arranged on any other types of electric power tools, such as hedge trimmer, chain saw, grinder, etc. It is also preferable that the power tools arranged with the braking control mechanism of the present invention are hybrid type power tools which has a hybrid AC / DC motor that can operate with both AC power (in AC mode) and DC power (in DC mode).

## Claims

1. A system for braking a motor (302), comprising: a motor (302) coupled with a power source through a control circuit (300); wherein the motor (302) is a hybrid AC / DC motor (302) operable in both AC mode and DC mode using AC power and DC power respectively, wherein coils in the motor (302) are energized when the motor (302) operates, wherein the coils comprise AC coils (302A) and DC coils (302B) that are both energized irrespective of whether the motor (302) operates in AC mode or DC mode, **characterized in that** the energy accumulated in the coils during operation of the motor (302) is used to brake the motor (302) as the operation of the motor (302) terminates **in that** the energy accumulated in the DC coils (302B) is continuously dissipated through a resistive means (318) in the control circuit (300) while the DC coils (302B) are continuously counteracting a residue electromagnetic energy in the AC coils (302A) to brake the motor (302) as the operation of the motor (302) terminates.

2. A system in accordance with claim 1, **characterized in that**, the AC coils (302A) and DC coils (302B) are both arranged on a rotor of the motor (302); or the AC coils (302A) and DC coils (302B) are both arranged on a stator of the motor (302).

3. A system in accordance with claim 1 or 2, **characterized in that**, the DC coils (302B) are wound directly onto a mounting member, and the AC coils (302A) are wound on an outer side of the DC coils (302B).

4. A method for braking a motor (302), wherein the motor (302) is coupled with a power source through a control circuit (300) and wherein the motor (302) is a hybrid AC / DC motor (302) operable in both AC mode and DC mode using AC power and DC power respectively, comprising the steps of: operating the motor (302) such that coils in the motor (302) are energized when the motor (302) operates; terminating operation of the motor (302) so as to allow the motor (302) to return to rest; wherein the coils comprise AC coils (302A) and DC coils (302B) that are both energized irrespective of whether the motor (302) operates in AC mode or DC mode, **characterized in that** the energy stored in the coils during operation of the motor (302) is used to brake the motor (302) as the operation of the motor (302) terminates **in that** the energy accumulated in the DC coils (302B) is continuously dissipated through a resistive means (318) in the control circuit (300) while the DC coils (302B) are continuously counteracting a residue electromagnetic energy in the AC coils (302A) to brake the motor (302) as the operation of the motor (302) terminates.

## Patentansprüche

1. System zum Bremsen eines Motors (302), umfassend: einen Motor (302), der über eine Steuerschaltung (300) mit einer Stromquelle gekoppelt ist; wobei der Motor (302) ein hybrider Wechselstrom-/Gleichstrommotor (302) ist, der sowohl im Wechselstrommodus als auch im Gleichstrommodus unter Verwendung von Wechselstrom bzw. Gleichstrom betreibbar ist, wobei die Spulen im Motor (302) erregt werden, wenn der Motor (302) arbeitet, wobei die Spulen Wechselstromspulen (302A) und Gleichstromspulen (302B) umfassen, die beide erregt werden, unabhängig davon, ob der Motor (302) im Wechselstrommodus oder im Gleichstrommodus arbeitet, **dadurch gekennzeichnet, dass** die in den Spulen während des Betriebs des Motors (302) akkumulierte Energie verwendet wird, um den Motor (302) zu bremsen, wenn der Betrieb des Motors (302) endet, indem die in den Gleichstromspulen (302B) akkumulierte Energie kontinuierlich durch ein Widerstandsmittel (318) in der Steuerschaltung (300) abgeleitet wird, während die Gleichstromspulen (302B) kontinuierlich einer restlichen elektromagnetischen Energie in den Wechselstromspulen (302A) entgegenwirken, um den Motor (302) zu bremsen, wenn der Betrieb des Motors (302) endet.

2. System nach Anspruch 1, **dadurch gekennzeichnet, dass** die Wechselstromspulen (302A) und Gleichstromspulen (302B) beide auf einem Rotor des Motors (302) angeordnet sind; oder die Wechselstromspulen (302A) und Gleichstromspulen (302B) beide auf einem Stator des Motors (302) angeordnet sind.

3. System nach Anspruch 1 oder 2, **dadurch gekennzeichnet, dass** die Gleichstromspulen (302B) direkt auf ein Montageelement gewickelt sind und die Wechselstromspulen (302A) auf eine Außenseite der Gleichstromspulen (302B) gewickelt sind.

4. Verfahren zum Bremsen eines Motors (302), wobei der Motor (302) über eine Steuerschaltung (300) mit einer Stromquelle gekoppelt ist und wobei der Motor (302) ein hybrider Wechselstrom-/Gleichstrommotor (302) ist, der sowohl im Wechselstrommodus als auch im Gleichstrommodus unter Verwendung von Wechselstrom bzw. Gleichstrom betreibbar ist, umfassend die folgenden Schritte: Betreiben des Motors (302), so dass die Spulen im Motor (302) erregt werden, wenn der Motor (302) arbeitet; Beenden des Betriebs des Motors (302), so dass der Motor (302) in den Ruhezustand zurückkehren kann; wobei die Spulen Wechselstromspulen (302A) und Gleichstromspulen (302B) umfassen, die beide erregt werden, unabhängig davon, ob der Motor (302) im Wechselstrommodus oder im Gleichstrommodus arbeitet, **dadurch gekennzeichnet, dass** die in den Spulen während des Betriebs des Motors (302) gespeicherte Energie verwendet wird, um den Motor (302) zu bremsen, wenn der Betrieb des Motors (302) endet, indem die in den Gleichstromspulen (302B) angesammelte Energie kontinuierlich durch ein Widerstandsmittel (318) in der Steuerschaltung (300) abgeleitet wird, während die Gleichstromspulen (302B) kontinuierlich einer restlichen elektromagnetischen Energie in den Wechselstromspulen (302A) entgegenwirken, um den Motor (302) zu bremsen, wenn der Betrieb des Motors (302) endet.

## Revendications

1. Système permettant de freiner un moteur (302), comprenant : un moteur (302) accouplé à une source de puissance par l'intermédiaire d'un circuit de commande (300) ; dans lequel le moteur (302) est un moteur hybride CA/CC (302) pouvant fonctionner à la fois en mode CA et en mode CC à l'aide de puissance CA et de puissance CC respectivement, dans lequel des bobines dans le moteur (302) sont mises sous tension lorsque le moteur (302) fonctionne, dans lequel les bobines comprennent des bobines CA (302A) et des bobines CC (302B) qui sont les unes et les autres mises sous tension indépendamment du fait que le moteur (302) fonctionne en mode CA ou en mode CC, **caractérisé en ce que** l'énergie accumulée dans les bobines pendant le fonctionnement du moteur (302) est utilisée pour freiner le moteur (302) lorsque le fonctionnement du moteur (302) se termine **en ce que** l'énergie accumulée dans les bobines CC (302B) est dissipée de façon continue par l'intermédiaire d'un moyen résistif (318) dans le circuit de commande (300) alors que les bobines CC (302B) contrecarrent de façon continue une énergie électromagnétique résiduelle dans les bobines CA (302A) pour freiner le moteur (302) lorsque le fonctionnement du moteur (302) se termine.

2. Système selon la revendication 1, **caractérisé en ce que**, les bobines CA (302A) et les bobines CC (302B) sont les unes et les autres agencées sur un rotor du moteur (302) ; ou les bobines CA (302A) et les bobines CC (302B) sont les unes et les autres agencées sur un stator du moteur (302).

3. Système selon la revendication 1 ou 2, **caractérisé en ce que**, les bobines CC (302B) sont enroulées directement sur un élément de montage, et les bobines CA (302A) sont enroulées sur un côté externe des bobines CC (302B).

4. Procédé permettant freiner un moteur (302), dans lequel le moteur (302) est accouplé à une source de puissance par l'intermédiaire d'un circuit de commande (300) et dans lequel le moteur (302) est un moteur hybride CA/CC (302) pouvant fonctionner à la fois en mode CA et en mode CC à l'aide de puissance CA et de puissance CC respectivement, comprenant les étapes consistant à : faire fonctionner le moteur (302) de telle sorte que des bobines dans le moteur (302) sont mises sous tension lorsque le moteur (302) fonctionne ; le fait de terminer le fonctionnement du moteur (302) de façon à permettre au moteur (302) de revenir au repos ; dans lequel les bobines comprennent des bobines CA (302A) et des bobines CC (302B) qui sont les unes et les autres mises sous tension indépendamment du fait que le moteur (302) fonctionne en mode CA ou en mode CC, **caractérisé en ce que** l'énergie stockée dans les bobines pendant le fonctionnement du moteur (302) est utilisée pour freiner le moteur (302) lorsque le fonctionnement du moteur (302) se termine **en ce que** l'énergie accumulée dans les bobines CC (302B) est dissipée de façon continue par l'intermédiaire d'un moyen résistif (318) dans le circuit de commande (300) alors que les bobines CC (302B) contrecarrent de façon continue une énergie électromagnétique résiduelle dans les bobines CA (302A) pour freiner le moteur (302) lorsque le fonctionnement du moteur (302) se termine.
